Europäisches Patentamt

European Patent Office

Office européen des brevets

(19)

(11) **EP 0 685 859 B1**

(12)

# FASCICULE DE BREVET EUROPEEN

(45) Date de publication et mention
de la délivrance du brevet:
**27.08.1997 Bulletin 1997/35**

(51) Int Cl.[6]: **H01G 9/00**

(21) Numéro de dépôt: **95401202.7**

(22) Date de dépôt: **23.05.1995**

(54) **Procédé de fabrication d'une électrode de supercondensateur**

Verfahren zur Herstellung einer Elektrode für einen Superkondensator

Method of making an electrode for a supercapacitor

(84) Etats contractants désignés:
**DE DK FR GB IT NL**

(30) Priorité: **30.05.1994 FR 9406532**

(43) Date de publication de la demande:
**06.12.1995 Bulletin 1995/49**

(73) Titulaire: **ALCATEL ALSTHOM COMPAGNIE
GENERALE D'ELECTRICITE
75008 Paris (FR)**

(72) Inventeurs:
- **Cottevieille, Denis
  F-93100 Montreuil (FR)**
- **Andrieu, Xavier
  F-91220 Bretigny sur Orge (FR)**
- **Cariou, Frédéric
  F-91380 Chilly Mazarin (FR)**

(74) Mandataire: **Laroche, Danièle et al
c/o ALCATEL ALSTHOM,
Département de Propriété Industrielle,
30, avenue Kléber
75116 Paris (FR)**

(56) Documents cités:
**EP-A- 0 449 145          WO-A-92/11649**

## Description

La présente invention concerne un procédé de fabrication d'une électrode destinée à être utilisée dans les supercondensateurs.

Les supercondensateurs le plus couramment utilisés comportent des électrodes composées soit d'un oxyde métallique déposé sur un collecteur, soit de charbon actif.

Les oxydes métalliques généralement employés sont des oxydes de ruthénium ou d'iridium. Ces oxydes sont obtenus par décomposition thermique oxydante de chlorures à des températures de l'ordre de 350-400°C comme décrit dans le brevet sud-africain n°662 667. Les méthodes habituellement utilisées pour leur préparation conduisent à un composé peu poreux. Les capacités massiques pratiques mesurées sur ces électrodes sont inférieures à 100 Farads par gramme de masse active.

Des capacités massiques pratiques de l'ordre de 150 Farads par gramme de masse active ont été obtenues avec des électrodes de charbon actif (EP-0 449 145). Mais les travaux sur ces matériaux ne permettent plus de progrès significatifs.

La présente invention a pour but de proposer un procédé de fabrication d'une électrode pour supercondensateur dont la capacité massique est notablement augmentée par rapport à celle des électrodes connues.

La présente invention propose à cet effet un procédé de fabrication d'une électrode de supercondensateur contenant l'oxyde d'un métal et un matériau carboné, caractérisé par le fait qu'il comporte les étapes suivantes:

- à partir d'un sel dudit métal dissout dans une solution aqueuse d'une base forte, on précipite l'hydroxyde dudit métal sous forme de gel par addition d'un alcool,
- ledit précipité d'hydroxyde dudit métal est lavé et séché,
- du charbon actif est ajouté audit précipité d'hydroxyde dudit métal pour constituer un premier mélange,
- ledit premier mélange est traité thermiquement afin de transformer l'hydroxyde en oxyde et on obtient un mélange d'oxyde métallique et de charbon actif qui est la matière active de l'électrode,
- à ladite matière active est ajouté un liant pour former une pâte qui est mise sous forme d'électrode.

Le procédé selon la présente invention comporte une première étape reposant sur le principe d'une précipitation sol-gel d'un hydroxyde métallique. Cet hydroxyde est précipité à partir d'une solution d'un sel du métal choisi, à une concentration comprise entre 1g et 30g par litre, dans une base forte qui peut être NaOH ou KOH par exemple, à l'exclusion de NH$_4$OH afin d'éviter des réactions de complexation.

De préférence, ledit métal est choisi parmi le ruthénium, l'iridium, le tungstène, le molybdène, le cobalt, le chrome, le manganèse, le nickel et leurs mélanges. Ces métaux ont pour avantage de présenter plusieurs états d'oxydation dont la composition n'est pas stoéchiométrique. Le domaine d'existence de ces oxydes correspond au domaine à l'intérieur duquel on observe un comportement capacitif.

De préférence encore, ledit sel métallique est choisi parmi un sel d'acide fort, comme un chlorure, un sulfate, ou un nitrate, et un sel de l'acide oxalique.

L'hydroxyde est rendu insoluble par addition dans cette solution d'un alcool. Il se forme alors un précipité très fin d'hydroxyde métallique (taille de particules inférieure à 1µm) qui reste en suspension dans la solution. De préférence, ledit alcool est choisi parmi l'éthanol, le méthanol, l'isopropanol, le butanol et leurs mélanges.

Le précipité est alors lavé afin d'éliminer l'anion salin. Le lavage est effectué par alternance de dispersion et de centrifugation, puis le précipité est séché sous vide.

On mélange alors intimement le précipité d'hydroxyde métallique à un charbon actif de grande surface, par exemple par mise en suspension en milieu liquide. Avantageusement, ledit charbon actif a une surface supérieure à 1000m$^2$/g. La réalisation de ce mélange a pour avantage de maintenir la dispersion du précipité qui aurait tendance à s'agglomérer à cause de sa faible granulométrie.

La transformation de l'hydroxyde en oxyde par élimination d'une molécule d'eau se fait par un traitement thermique. De préférence, ledit traitement thermique est effectué à une température comprise entre 200°C et 300°C de manière à ne pas dégrader le charbon actif. Le traitement thermique peut être réalisé sous atmosphère inerte. On obtient ainsi un mélange intime d'oxyde métallique et de charbon actif qui constitue la matière active de l'électrode, auquel on ajoute un liant.

Les réactions mises en jeu dans le procédé selon l'invention sont les suivantes, dans lesquelles M est le métal et A est l'anion salin:

(I) $\quad$ x M$^+$,A$^-$ + xy OH$^-$ $\rightarrow$ x M(OH)$_y$ $\downarrow$ + x A$^-$

(II) $\quad$ x M(OH)$_y$ + (y-2z)/4 O$_2$ $\rightarrow$ x MO$_z$ + xy/2 H$_2$O

Le procédé selon la présente invention a comme avantage de fournir une matière active de très grande surface due à sa forte dispersion. Cette caractéristique est liée aux conditions de précipitation de l'hydroxyde et à la dispersion du précipité dans une matrice microporeuse. La réalisation du mélange de l'hydroxyde et du charbon actif préalablement au traitement thermique permet une meilleure cohésion entre les constituants de la matière active de l'électrode.

D'autres caractéristiques et avantages de la présente invention apparaitront à la lecture des exemples suivants de modes de réalisation, donnés bien entendu à titre illustratif mais nullement limitatif et dans le dessin annexé dans lequel:

- la figure 1 représente le spectre de voltampérométrie cyclique d'une électrode de l'art antérieur,
- et la figure 2 représente un spectre analogue pour une électrode selon la présente invention.

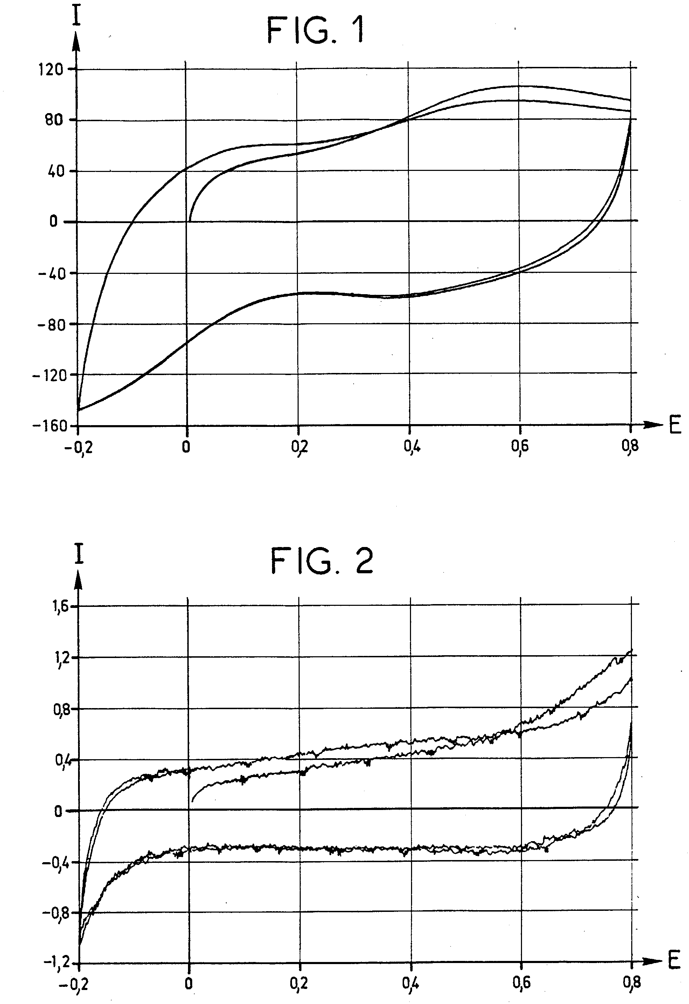

Sur les figures 1 et 2, l'intensité I en mA est donnée en ordonnée et en abscisse le potentiel E en V par rapport à l'électrode de référence au calomel.

EXEMPLE 1       Art antérieur

On dissout 1g de chlorure de ruthénium hydraté $RuCl_3,xH_2O$ dans un milieu chauffé à 50°C contenant 2g d'une solution HCl à 20%. Un séchage complet de 24 heures en étuve à 60°C permet de récupérer un composé solide qui est soluble dans l'isopropanol.

A l'aide d'isopropanol on réalise une pâte visqueuse qui est déposé sur un support de titane préalablement porté à 100°C. On effectue un séchage de 30 minutes à 150°C sous air précédé d'un pré-séchage de 40 minutes à 50°C. Puis le chlorure de ruthénium séché est décomposé sous air à 300°C pendant 2 heures. On obtient alors sur le support une fine couche d'oxyde de ruthénium $RuO_2$.

L'opération de dépôt et de traitement thermique du chlorure de ruthénium est renouvelée plusieurs fois afin de former sur le support en titane une couche épaisse d'oxyde de ruthénium qui est enfin traitée à 315°C sous air pendant 2 heures pour compléter l'oxydation.

Cette électrode est testée par voltampérométrie cyclique en milieu sulfurique ($H_2SO_4$ 5N, d=1,25) avec une vitesse de balayage de 10mV/s. La capacité massique mesurée à un courant de 123mA est de 59,3 Farads par gramme d'électrode. Le domaine d'électroactivité de la matière active est de 0,69V (figure 1).

EXEMPLE 2

On dissout 1g de chlorure de ruthénium hydraté $RuCl_3,xH_2O$ dans $30cm^3$ d'une solution de soude NaOH 1N. On introduit alors un excès d'alcool éthylique qui provoque la précipitation d'hydroxyde de ruthénium Ru $(OH)_4$ en grains très fins.

Le précipité est alors extrait par centrifugation puis redispersé dans l'éthanol. Cette opération est renouvelée à plusieurs reprises jusqu'à ce que le test au nitrate d'argent indique l'absence d'ion Cl⁻. Le précipité est enfin lavé à l'éther, récupéré par centrifugation et séché sous vide à 70°C pendant 17 heures.

On réalise alors le mélange de 1g de charbon actif et de 258,6mg d'hydroxyde de ruthénium $Ru(OH)_4$ qui est dispersé dans une solution composée de 50% d'éthanol et de 50% de terpinéol. Le liquide épais obtenu est homogénéisé pendant 1 heure au broyeur à boule, puis centrifugé. Le composé solide obtenu est successivement lavé à l'éthanol et à l'éther comme décrit précédemment, puis séchée 17 heures à 70°C.

Le mélange de poudres est alors traité sous vide à 300°C pendant 24 heures. On obtient une matière active d'électrode contenant 20% d'oxyde de ruthénium $RuO_2$. On ajoute 8% d'une émulsion de polytétrafluoroéthylène PTFE à une certaine quantité de la matière active préparée précédemment et on réalise une électrode d'épaisseur 0,52mm et pesant 18,1mg.

Cette électrode est testée par voltampérométrie cyclique en milieu sulfurique ($H_2SO_4$ 5N, d=1,25) avec une vitesse de balayage de 0,1mV/s. La capacité mesurée à un courant de 0,78mA est de 3,9 Farads, soit une capacité massique de 215,47 Farads par gramme d'électrode. Le domaine d'électroactivité de la matière active est de 0,69V (figure 2).

Bien entendu la présente invention n'est pas limitée aux modes de réalisation décrits, mais elle est suceptible de nombreuses variantes accessibles à l'homme de l'art sans que l'on ne s'écarte de l'invention telle que définie par les revendications ci-jointes.

**Revendications**

1. Procédé de fabrication d'une électrode de supercondensateur contenant l'oxyde d'un métal et un matériau carboné, caractérisé par le fait qu'il comporte les étapes suivantes:

   - à partir d'un sel dudit métal dissout dans une solution aqueuse d'une base forte, on précipite l'hydroxyde dudit métal sous forme de gel par addition d'un alcool,
   - ledit précipité d'hydroxyde dudit métal est lavé et séché,
   - du charbon actif est ajouté audit précipité d'hydroxyde dudit métal pour constituer un premier mélange,
   - ledit premier mélange est traité thermiquement afin de transformer l'hydroxyde en oxyde et on obtient un mélange d'oxyde métallique et de charbon actif qui est la matière active de l'électrode,
   - à ladite matière active est ajouté un liant pour former une pâte qui est mise sous forme d'électrode.

2. Procédé selon la revendication 1, dans lequel ledit métal est choisi parmi le ruthénium, l'iridium, le tungstène, le molybdène, le cobalt, le chrome, le manganèse, le nickel et leurs mélanges.

3. Procédé selon la revendication 1, dans lequel ledit sel métallique est choisi parmi un sel d'acide fort et un sel de l'acide oxalique.

4. Procédé selon la revendication 1, dans lequel ledit alcool est choisi parmi l'éthanol, le méthanol, l'isopropanol, le butanol et leurs mélanges.

5. Procédé selon la revendication 1, dans lequel ledit traitement thermique est effectué à une température comprise entre 200°C et 300°C.

**Patentansprüche**

1. Herstellungsverfahren für eine Superkondensator-Elektrode vor, die das Oxid eines Metalls und ein kohlenstoffhaltiges Material enthält, dadurch gekennzeichnet, daß es die folgenden Schritte aufweist:

   - ausgehend von einem Salz des in einer wässrigen Lösung einer starken Base gelösten Metalls wird das Hydroxid dieses Metalls durch Hinzufügung eines Alkohols in Form eines Gels ausgefällt,
   - diese Ausfällung des Metallhydroxids wird gewaschen und getrocknet,
   - Aktivkohle wird der Ausfällung des Metallhydroxids hinzugefügt, um eine erste Mischung zu bilden,
   - diese erste Mischung wird wärmebehandelt, um das Hydroxid in ein Oxid umzuwandeln, und man erhält eine Mischung aus Metalloxid und Aktivkohle, die das aktive Material der Elektrode bildet,
   - diesem aktiven Material wird ein Bindemittel hinzugefügt, um eine Paste zu bilden, die in die Form einer Elektrode gebracht wird.

2. Verfahren nach Anspruch 1, bei dem das Metall ausgewählt wird aus Ruthenium, Iridium, Wolfram, Molybdän, Kobalt, Chrom, Mangan, Nickel und ihren Mischungen.

3. Verfahren nach Anspruch 1, bei dem das Metallsalz ausgewählt aus einem Salz einer starken Säure und einem Salz der Oxalsäure.

4. Verfahren nach Anspruch 1, bei dem der Alkohol ausgewählt wird aus Äthanol, Methanol, Isopropanol, Butanol und ihren Mischungen.

5. Verfahren nach Anspruch 1, bei dem die Wärmebehandlung bei einer Temperatur zwischen 200°C und 300°C durchgeführt wird.

**Claims**

1. A method of manufacturing a supercapacitor electrode containing a metal oxide and carbon-containing material, the method being characterized by the fact that it includes the following steps:

   starting from a salt of said metal dissolved in an aqueous solution of a strong base, the hydroxide of said metal is precipitated in the form of a gel by adding an alcohol;
   said precipitate of the hydroxide of said metal is washed and dried;
   active carbon is added to said precipitated hydroxide of said metal to constitute a first mixture;
   said first mixture is subjected to heat treatment in order to transform the hydroxide into an oxide, and a mixture of metal oxide and of active carbon is obtained which constitutes the active material of the electrode; and
   a binder is added to said active material to form a paste which is put into the form of an electrode.

2. A method according to claim 1, in which said metal is selected from: ruthenium, iridium, tungsten, molybdenum, cobalt, chromium, manganese, nickel, and mixtures thereof.

3. A method according to claim 1, in which said metal salt is selected from a salt of a strong acid and a salt of oxalic acid.

4. A method according to claim 1, in which said alcohol is selected from ethanol, methanol, isopropanol, butanol, and mixtures thereof.

5. A method according to claim 1, in which said the treatment is performed at a temperature lying in the range 200°C to 300°C.

FIG. 1

FIG. 2